# EUROPEAN PATENT APPLICATION

(11) **EP 2 018 810 A1**
(43) Date of publication of application: **28.01.2009**
(21) Application number: 07425469.9
(22) Date of filing: 26.07.2007
(51) Int. Cl.: A23C 11/10, A23L 1/20, A23P 1/06

(54) **A process for producing soya milk in powder form and a plant for realising the process**

(71) Applicant: CFT S.p.A., 43100 Parma (IT)
(72) Inventor: Catelli, Roberto, 43100 Parma (IT); Lazzari, Alessio, 46030 Viadana (Mantova) (IT)
(74) Representative: Gotra, Stefano

(57) **Abstract**

A process for producing soya milk in powder form, comprising following stages: wet-milling soya seeds with milling water to obtain a slurry; a stage of homogenising the slurry to obtain soya milk in powder form. The stages of homogenising and drying the slurry are performed without carrying out a prior stage of separating the insoluble residues from the slurry.

## Description

The invention relates to a process for soya milk in powdered form, and also to a plant for realising the process.

Soya milk is a liquid derivative of soya, increasingly preferred by consumers on account of its easy digestibility and its special nutritional characteristics which differentiate it from cow's milk. It is not only marketed in liquid form, but is also sold in a dried powder form. Starting from this form, the preparation can be returned to liquid form in order to be consumed, or can be used in the food industry as a protein additive or for altering the flavour and aesthetic qualities of other products.

In prior-art production of soya milk, the milk is prepared according to known processes, before drying the product to make a powder. The process includes use of soya seeds as raw materials, which are first dehulled, then rehydrated by soaking them for a predetermined period before subjecting them to a wet-milling process by adding the water required to give the finished product the desired consistency. The resulting milled product, known internationally as slurry, is then separated from the insoluble fibrous residues (soya pulp, or okara) which cannot form part of the end product. Once the waste has been eliminated, the remaining liquid is subjected to concentration, sterilisation and possibly further process operations (homogenisation, vitamin enrichment and so on) before being dried in order to obtain powdered milk.

The above-mentioned okara, or fibrous waste, in present processes for obtaining powdered soya milk, constitutes a plentiful sub-product of little appeal. In effect, with present production systems, about 50% in weight of the raw material is eliminated as okara. The product is recyclable as an ingredient for animal feed, but as demand is very much lower than supply in this sector, the disposal of the soya pulp at the end of the plant process almost always represents a cost to the producer. Further, the disposal as waste of part of the soya used in the process causes a drastic drop in the plant production rate. What is more, the okara contains all the non-soluble substances in hot water originally present in the seeds; among these substances are the fibres, which would probably be particularly appreciated by the soya milk consumers, who are in many cases attracted by the dietetic qualities of the product.

The separation of the okara from the end product also causes a further problem. The proteins in the soya must not be eliminated with the sub-product, as the milk obtained would lose a large part of its nutritional content. To avoid loss of proteins, the proteins must be solubilised by raising the alkalinity of the process solution. Normally, the desired effect is obtained by including sodium carbonate in solution in the milling water, taking the pH of the water to a value of between 8 and 10. The addition of a milling water preparation station, and the introduction of the sodium carbonate into the production process, however, obviously lead to an increase in plant construction and management costs, as well as variable production costs.

The aim of the present invention is to provide a process for producing soya milk in powdered form which does not exhibit the above-described drawbacks connected with the elimination of the insoluble waste products during the production process.

An advantage of the process of the invention is the considerable increase in the extraction performance, i.e. the quantity of end product obtainable from a determined quantity of raw material.

A further advantage of the present invention relates to the zeroing of disposal costs of the okara.

A further advantage of the described process derives from the fact that it is not necessary to use sodium carbonate to maintain the protein values in the end product at high levels.

A further advantage of the process of the invention relates to the high fibre content of the milk produced.

A further advantage of the powdered milk obtained using the present process is the greater water-solubility and stability of the watery solution obtained with reference to the products obtained using the processes available in the prior art.

Still further advantages relate to the reduction of plant energy costs, in particular those costs relating to the energy required for producing the milk powder.

Further characteristics and advantages of the process of the invention will better emerge from the detailed description made herein below with reference to the accompanying figures of the drawings, provided by way of non-limiting example, in which:

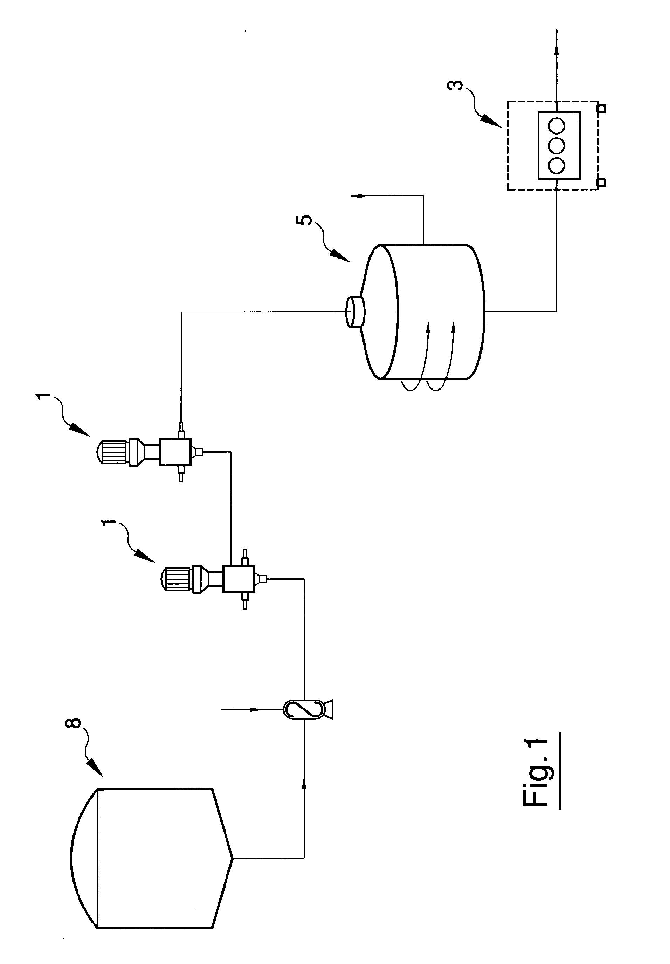

figure 1 is a simplified flow diagram of a process line of a plant for producing soya milk in powder form according to the prior art;
figure 2 is a simplified flow diagram of the plant process line of the present invention.

The process for producing powdered soya milk of the present invention comprises following stages: milling the soya seeds with milling water (preferably at a temperature of above 80°C in order to de-activate the lipoxygenase enzymes), obtaining a slurry which comprises insoluble residues (those which constitute the okara in the known extraction processes); drying the slurry to obtain milk powder. Between the stages of homogenising the slurry and drying it a stage of homogenising the slurry is performed. The stages of homogenising the slurry and drying it are performed without a prior stage of separating the insoluble residues therefrom. In the prior art, as described above, the powdered milk is obtained by a drying process performed downstream of a soya milk production process. In the process of the invention, the milk production process is not completed; the separation of the liquid from the insoluble residues (the fibrous waste of the okara) is not performed. The elimination of the okara is without doubt a fundamental stage of normal soya milk production processes. Not including this stage would certainly lead to suspension of fibrous residues in the final liquid product which on the one hand would considerably complicate the movement of the substance through the following plant stations, and would in any case not be appreciated by the end consumer. In the process of the invention, this stage is unnecessary, as the final product is in powder form. The special stage of homogenisation leads to a disintegration of the suspended insoluble residues in the produce such that a subsequent stage of drying using a spray dryer can be performed, giving a powdered product which is easily dissolved in water. The stage of homogenising the slurry reduces the diameter of the insoluble residues (the solid particles suspended in the slurry) to dimensions of less than 10 µm. In general, the particles are brought to a diameter comprised between 0.5 and 2 µm, which result in a colloidal watery solution.

The stage of milling the soya seeds advantageously comprises a stage of micronising the slurry, in which the insoluble residues suspended in the slurry are reduced to a diameter which is equal to or less than 80 µm, in order to facilitate the following stage of homogenisation. In the example, this diameter is comprised between 50 and 80 µm.

Spray-drying the product, though homogenised, without eliminating the insoluble residues has a considerable cost in terms of energy. To reduce pulverisation costs, the process of the present invention comprises a stage of concentrating the slurry, before the stage of drying it. This concentration stage can precede or follow the homogenisation stage; preferably the concentration stage is effected on the already-homogenised product. Indicatively, the concentration stage increases the solid concentration of the slurry to a value of between 25% and 35% with respect to the value of between 15% and 20% of the homogenised product.

The process also includes a stage of thermally treating the slurry to deactivate the tripsin inhibitors in the soya. The tripsin inhibitors are damaging for human health and it is common practice to deactivate them by a thermal process following milling. By using an evaporator to effect the previously-mentioned stage of slurry concentration, the temperatures reached internally of the apparatus obtain the double result of reducing the quantity of the water solution and deactivating the inhibitors.

The process of the invention further comprises a stage of deaerating the slurry before the drying stage. The main aim of this stage is to eliminate gases which might compromise the aesthetic and organic qualities of the end product.

The process of the invention, like the process in the prior art, in addition to the already-mentioned stages further comprises a sequence of further stages necessary for preparation of the soya to be milled and to its mixing with the milling water. To this end the process comprises the following stages, which precede the stage of milling soya seeds with milling water: dehulling the soya seeds and rehydrating the soya seeds internally of a rehydrator at least partially filled with rehydration water. The two stages are performed following known processes.

The process of the invention advantageously comprises at least a washing cycle of the soya seeds which is done at the same time as the stage of rehydrating the soya seeds. The washing cycles, which are preferably between 1 and 3 in number, comprise stages of introducing the washing water into the rehydrator and then extracting the washing water, causing a movement of the soya seeds in the rehydrator. In the preferred embodiment of the process, during the washing cycle the excess water present in the rehydrator is discharged through at least an overflow, while the washing water is introduced into the rehydrator at a lower level than the level of the overflow: in this way the water introduced flows across the stationary soya seeds in the rehydrator and causes them to move. The washing cycles guarantee the complete removal of powders, residual hulls and other foreign bodies mixed in with the soya seeds, and also remove undesired water-soluble substances such as sugars and pigments which are present in the seed mixture.

As it is of fundamental importance for the quality of the end product that the milling water and the soya seeds be milled in the correct proportions (the mass ratio between soya seeds and water must be about ¼; for the production of liquid milk in a like process a ratio of 1/6 is required), the process described herein comprises stages of acquiring a control value which is proportional to the mass of slurry produced per unit of time during the stage of milling the soya seeds and retroactively controlling the ratio between the milling water added to the soya seeds and the soya seeds based on the control value. The control value is read by a mass flow meter; using the value taken, and in consideration of the fact that the mass flow of the milling water is known and constant, the introduction of the soya seeds can be batched.

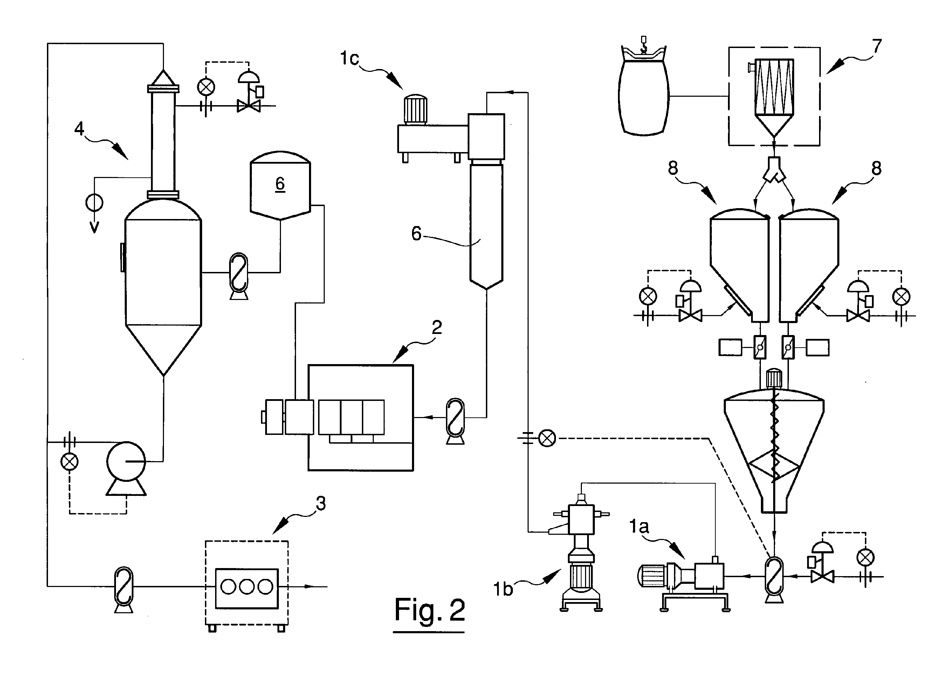

To perform the above-described process stages, a plant is required which comprises at least a milling station 1a, 1b, 1c comprising a grinding mill to mill soya seeds together with milling water, obtaining a slurry comprising insoluble residues, and at least a drying station 3 of the slurry comprising a spray dryer arranged downstream with respect to the milling station. The plant further comprises at least a homogenising station 2 for the slurry which comprises a homogeniser arranged downstream of the at least a milling station 1a, 1b, 1c and upstream of the drying station 3. In the example, between the at least a milling station 1a, 1b and 1c and the drying station no further station is interposed for separating the insoluble residues from the slurry (station 5 in figure 2); this station, which alternatively comprises a separation decanter or a centrifuge separator, is always present in the prior art.

The milling stations are preferably at least two in number, and can comprise a third milling station which includes a micronising mill predisposed to reduce the insoluble residues suspended in the slurry having a diameter of equal to or less than 50 µm.

In the preferred embodiment, the milling stations are three in number and arranged in series, one after another. A first milling station 1a comprises a pre-grinding rotary cage milling station, while a second milling station 1b arranged downstream with respect to the first comprises a colloidal grinder mill. These two milling stations are normally used for soya milk production, and enable a product with suspended insoluble residues to be produced which residues are of a diameter comprised between 150 and 300 µm. In the plant of the present invention, differently to the plants in the prior art, the slurry exiting from the mills is introduced into a homogeniser without the insoluble residues having previously been eliminated. The product introduced into a homogeniser cannot, however, include residues having a diameter of much above 50 µm. To further refine the liquid to be subjected to a homogenising process, the plant therefore comprises, downstream of the two preceding milling stations, a third milling station 1c which comprises a micronising mill that brings the suspended residues to values comprised between 10 and 50 µm. The third milling station 1c, which is not present in the prior-art plants, is therefore of particular relevance to the present invention, as it enables the transition of the process liquid from the milling process to the homogenising station 2.

To achieve the described stage of concentrating the product before drying it, the plant advantageously comprises a concentration station 4 comprising an evaporator. The evaporator is preferably a single-acting evaporator, although double, triple or quadruple-acting evaporators could advantageously be used in the case of high-flow process lines. The concentration station 4 comprises at least a first pump connected to the evaporator for removal of the condensable vapours and at least a second pump connected with the evaporator for removal of the non-condensable gases. Preferably the first pump is a centrifuge pump and is connected to a condensation chamber for recuperating the process water. The above-described de-aerating stage of the slurry is performed by means of the second pump. As can be deduced from the above process description, the concentration station 4 can either be arranged upstream or downstream of the homogenisation station 2.

The plant advantageously comprises at least a compensation tank 6 arranged downstream of the at least a milling station 1a, 1b, 1c. The tank is preferably located directly upstream of the concentration station 4.

Further, the plant comprises stations for preparing the soya seeds to be milled. The stations comprise at least a dehulling station 7 and at least a rehydrating station 8 comprising a rehydrator predisposed to temporarily contain the soya seeds and the rehydrating water. The stations are obviously arranged upstream of the at least a milling station 1a, 1b, 1c.

As indicated herein above in the description of the stage of retroactively acquiring the control values of the ratio between the milling water and the soya seeds, the plant of the invention comprises a mass flow meter arranged at the outlet of one of the at least a milling station 1a, 1b, 1c and predisposed to generate signals for controlling the ratio between the milling water and the rehydrated soya seeds entering the milling stations 1a, 1b, 1c. Obviously the various process stations as described above are interconnected by means for connecting and transport of the material.

## Claims

1. A process for producing soya milk in powder form, comprising following stages: wet-milling soya seeds with milling water to obtain a slurry comprising insoluble residues and drying the slurry to obtain milk in a powder form; **characterised in that** between the stages of milling the soya seeds and drying the slurry there is a stage of homogenising the slurry; the stage of drying the slurry being performed without carrying out a prior stage of separating the insoluble residues therefrom.

2. The process of claim 1, **characterised in that** the stage of milling the soya seeds comprises a stage of micronising the slurry, in which the insoluble residues of the slurry are reduced to a diameter equal to or less than 80 µm.

3. The process of claim 2, **characterised in that** the stage of milling the soya seeds comprises a stage of micronising the slurry in which the insoluble residues of the slurry are reduced to a diameter comprised between 50 and 80 µm.

4. The process of one of the preceding claims, **characterised in that** the stage of homogenising the slurry reduces the diameter of the insoluble residues of the slurry to a size of less than 10 µm.

5. The process of one of the preceding claims, **characterised in that** it comprises a stage of concentrating the slurry which precedes the stage of drying the slurry.

6. The process of claim 5, **characterised in that** during the stage of concentrating the slurry the solid concentration of the slurry is brought to a value of between 25% and 35%.

7. The process of one of the preceding claims, **characterised in that** it comprises a stage of heat-treating the slurry in order to deactivate tripsin inhibitors present in the soya seeds.

8. The process of the preceding claims, **characterised in that** it comprises a stage of de-aerating the slurry which precedes the stage of drying the slurry.

9. The process of one of the preceding claims, **characterised in that** it comprises following stages which precede the stage of milling the soya seeds with milling water: dehulling the soya seeds, rehydrating the soya seeds internally of a rehydrator which rehydrator is at least partly filled with rehydrating water.

10. The process of claim 9, **characterised in that** it comprises at least a washing cycle of the soya seeds which is performed contemporaneously with the stage of rehydrating the soya seeds, the washing cycles comprising stages of introducing washing water into the rehydrator and extracting the washing water from the rehydrator, determining a movement of the soya seeds introduced there-into.

11. The process of claim 10, **characterised in that** it comprises following stages: acquiring a control value which is proportional to a mass of the slurry produced per unit of time during the stage of milling the soya seeds; retroactively controlling a ratio between the milling water added to the soya seeds which ratio is based on the control value.

12. A plant for production of soya milk in powder form, comprising at least a milling station comprising a grinding mill for milling soya seeds with milling water to obtain a slurry comprising insoluble residues and at least a drying station of the slurry comprising a spray dryer arranged downstream with respect to the milling station, **characterised in that** it comprises at least a homogenising station (2) of the slurry which comprises a homogeniser arranged downstream of the milling station (1a, 1b, 1c) and **in that** between the at least a milling station (1a, 1b, 1c) and the drying station (3) there is not a station for separating the insoluble residues from the slurry.

13. The plant of claim 12, **characterised in that** the milling stations (1a, 1b, 1c) are at least two in number, of which one is a third milling station (1c) comprising a micronising mill predisposed to reduce the insoluble residues in the slurry having a diameter equal to or less than 50 µm.

14. The plant of claim 13, **characterised in that** the milling stations (1a, 1b, 1c) are three in number, among which a first milling station (1a) which comprises a rotary-cage pre-grinding mill and a second milling station (1b) comprising a colloidal grinder mill.

15. The plant of one of claims from 12 to 14, **characterised in that** it comprises at least a concentrating station (4), comprising an evaporator arranged upstream of the drying station (3).

16. The plant of claim 15, **characterised in that** the concentrating station comprises at least a first pump connected to the evaporator for removing condensable vapours and at least a second pump connected to the evaporator for removing non-condensable gases.

17. The plant of one of claims 15 or 16, **characterised in that** it comprises at least a compensation tank (6) arranged downstream of the at least a milling station (1a, 1b, 1c).

18. The plant of one of claims from 12 to 17, **characterised in that** it comprises at least a dehulling station (7) and at least a rehydrating station (8) comprising a rehydrator predisposed to temporarily contain the soya seeds and rehydrating water, the dehulling station (7) and the rehydrating water station (8) being arranged upstream with respect to the at least a milling station (1a, 1b, 1c).

19. The plant of claim 18, **characterised in that** it comprises a mass flow meter arranged at an outlet of one of the at least a milling station (1a, 1b, 1c) and predisposed to generate signals for controlling a ratio between milling water and rehydrated soya seeds arriving at the at least a milling station (1a, 1b, 1c).
